# EUROPEAN PATENT APPLICATION

(11) **EP 3 330 539 A1**
(43) Date of publication of application: **06.06.2018**
(21) Application number: 17001945.9
(22) Date of filing: 28.11.2017
(51) Int. Cl.: F04B 27/10

(54) **ROTARY VALVE FOR A REVERSIBLE COMPRESSOR**

(30) Priority: 02.12.2016 US 201615367973
(71) Applicant: Harris Corporation, Melbourne, FL 32919 (US)
(72) Inventor: Kay, Steven D., Greenlawn, NY 11740 (US); Shapiro, Jeffrey S., Long Beach, NY 11561 (US); Hammerquist, Robert E., Huntington, NY 11743 (US); Hartney, Steven A., Farmingdale, NY 11735 (US)
(74) Representative: Schmidt, Steffen J.

(57) **Abstract**

A two-way flow rotary valve (140,160) for a reversible compressor is disclosed. The two-way flow rotary valve comprises a tubular member with a first end and a second end (102,104). Two or more low friction face seals (152,172) are disposed around the tubular member between the first end and the second end and a central section (156,176) is disposed between the two or more low friction face seals. The two or more low friction face seals allow the central section to rotate within a substantially cylindrical receiver of a cylinder head. A gas port (142,162) extends through the tubular member and is configured to allow the rotary valve to selectively exchange gas with a cylinder (when used as a compressor and when used as an air motor).

## Description

### BACKGROUND

In order to control air flow into and out of an air compressor, a compressor typically includes or utilizes check valves, such as reed or ball valves. However, since check valves (e.g., reed valves and ball-type check valves) require overlapping sealing geometry and/or spring biasing, reed or check valves can only provide port openings (e.g., gas intake and discharge openings) of limited size. Moreover, even if a compressor is designed to accommodate a relatively large reed or check valve, larger valves create actuation timing issues since large valves are heavy, and heavy valves are slow to respond without large actuation forces (which creates additional undesirable consequences). For example, at high performance levels (e.g., high volumetric rates) reed and/or ball-type check valves must be quite large and, thus, frequently become unstable and cause opening and closing events to depart from an ideal timing. Still further, regardless of its size, the one-way nature of a reed or ball-type check valve does not allow system reversal. These limitations limit the size, speed, and function of a compressor.

In order to provide more reliable closures and openings, some combustion and steam engines include rotary valves. However, rotary valves that are typically utilized by internal combustion and steam applications are typically only configured to operate at chamber pressures between approximately 250 and approximately 1500 pounds per square inch (psi). By comparison, many compression operations, especially for high-performance compressors) may create chamber pressures up to approximately 6000 psi. At these pressures, typical rotary valves may be unable to rotate (e.g., because the pressure may create a friction force between the valve and its housing that cannot be overcome without a very large actuation force and/or damaging the valve), preventing the valve from opening and closing. Consequently, these rotary valves cannot be incorporated in high-pressure compressors.

In view of the aforementioned issues, a two-way flow rotary valve that provides stable opening and closing events (e.g., opens a compression chamber to either an intake port or an exhaust port) for a compressor, and in particular, a high-performance compressor, is desired. Additionally, two-way flow rotary valves, through a phasing device, may also allow for valve timing variations, including full system reversal (allowing transformation of an air compressor to an air motor). Thus, a two-way flow rotary valve that allows system reversal of a compressor is desirable.

### SUMMARY

The described compressor rotary valve comprises a tubular member with a first end and a second end. Two or more low friction face seals are disposed around the tubular member between the first end and the second end and a central section is disposed between the two or more low friction face seals. The two or more low friction face seals allow the central section to rotate within a substantially cylindrical receiver of a compressor head. A gas port extends through the tubular member and is configured to allow the rotary valve to selectively exchange gas with a compression chamber.

A compressor including the described compressor rotary valves comprises a compression chamber, a compressor block with a reciprocating compressor piston configured to periodically alter a volume of the compression chamber, and a compressor head including a first rotary valve and a second rotary valve. The first rotary valve and the second rotary valve each include one or more face seals configured to allow the first rotary valve and the second rotary valve to rotate into the compression chamber when the compression chamber is pressurized and the first rotary valve and the second rotary valve are configured to enable the compressor to cycle through compression phases and/or fully reverse the compression phases.

A method of controlling gas flow into and out of a compression chamber with the described compressor rotary valves comprises providing a first rotary valve in a compressor head that is configured to rotate into fluid communication with a compression chamber and providing a second rotary valve in the compressor head the is configured to rotate into fluid communication with the compression chamber. A gas port included in the first rotary valve is rotated into fluid communication with the compression chamber during a first phase of a reciprocating compressor piston configured to periodically alter a volume of the compression chamber and a gas port included in the second rotary valve is rotated into fluid communication with the compression chamber during a second phase of the reciprocating compressor piston.

The above and still further features and advantages of the described system will become apparent upon consideration of the following definitions, descriptions and descriptive figures of specific embodiments thereof wherein like reference numerals in the various figures are utilized to designate like components. While these descriptions go into specific details, it should be understood that variations may and do exist and would be apparent to those skilled in the art based on the descriptions herein.

### BRIEF DESCRIPTION OF THE DRAWINGS

FIG. 1 is a top perspective view of an example embodiment of a portion of a compressor/motor including a first set of rotary valves configured in accordance with the present invention.
FIG. 2 is a top, sectional view of the head included in FIG. 1.
FIG. 3 is a side perspective view of a high-pressure rotary valve included in the head of the compressor/motor of FIG. 1.
FIG. 4 is a side perspective view of a low-pressure rotary valve included in the head of the compressor/motor of FIG. 1.
FIG. 5 is a top perspective view of a head of the compressor/motor of FIG. 1.
FIG. 6 is a side, sectional view of the compressor/motor of FIG. 1 including a second set of rotary valves configured in accordance with the present invention.
FIGs. 7A-D illustrate a first rotary cycle of the compressor/motor of FIG. 6.
FIGs. 8A-D illustrate a second rotary cycle of the compressor/motor of FIG. 6.

### DETAILED DESCRIPTION

Presented herein is a two-way flow rotary valve for compressors and, in particular, high-performance compressors (including a fully reversible compressor/motor). The rotary valve of the present invention is suitable for high-performance compressors at least because the rotary valve presented herein can rotate into and through a high-pressure compression chamber. The rotary valve is operable in high-pressure environments (e.g., able to rotate through or in high-pressure environments) due, at least in part, to low friction face seals (e.g., silicon carbide face seals) that encircle longitudinal ends of the rotary valve and engage a bore in a head which houses the rotary valve. More specifically, the face seals extend around the ends of a section of the valve that is configured to rotate within a cylindrical receiver (e.g., a bore) included in a compressor head and allow the section of the valve to sit within the cylindrical receiver without touching the receiver (e.g., a gap exists between the section of the valve and the receiver). Consequently, a rotary valve in accordance with the present invention can rotate in the bore, even at high compression chamber pressures (e.g., approximately 6000psi). Moreover, the rotary valve presented herein may include vane seals, such as graphite vane seals. As is described in further detail below, the vane seals may extend substantially perpendicularly to the face seals and, thus, may close a radial gap between a rotary valve and its cylindrical receiver to prevent inter-valve leakage.

Since the rotary valve presented herein can be utilized with high-performance compressors (e.g., compressors with high volumetric rates and high compression chamber pressures), the rotary valves provide a number of advantages, especially as compared to ball-type check valves, reed valves, and other such check valves typically utilized with compressors. For example, the rotary valves presented herein allow for a reduction in size, weight, and other such cost-related design features of high-performance compressors, while also providing precise and immediate opening and closing events during a compression cycle. The rotary valves set forth herein may also provide large gas ports that can be immediately opened and closed and, thus, may be capable of handling larger volumes of gas. Finally, as described below, the rotary valves set forth herein may also provide for full reversal of the compressor (i.e, "motoring"), something which ball-type check valves, reed valves, and other such check valves would be incapable of providing.

Moreover, a phasing device located between the crankshaft and the valve may permit a variation in valve open/close events, thereby allowing for system optimization by compensating for volumetric losses or timing variation during compressor operation. The phasing device may also manipulate the rotational timing of the rotary valves to allow full system reversal of high-performance compressors. For example, altering the phase of the valves from the reference of the crankshaft may reverse the normal operation of a compressor (e.g., intake low-pressure air and expel high-pressure air) so that high-pressure air flows into the compressor, is expanded, and then discharged at a low-pressure while generating rotary power (making the compressor function as an air motor from which power is derived). This system reversal is useful for at least energy recovery systems, such as hybrid pneumatic vehicles, utility peak demand management in wind farms, and wave power generation.

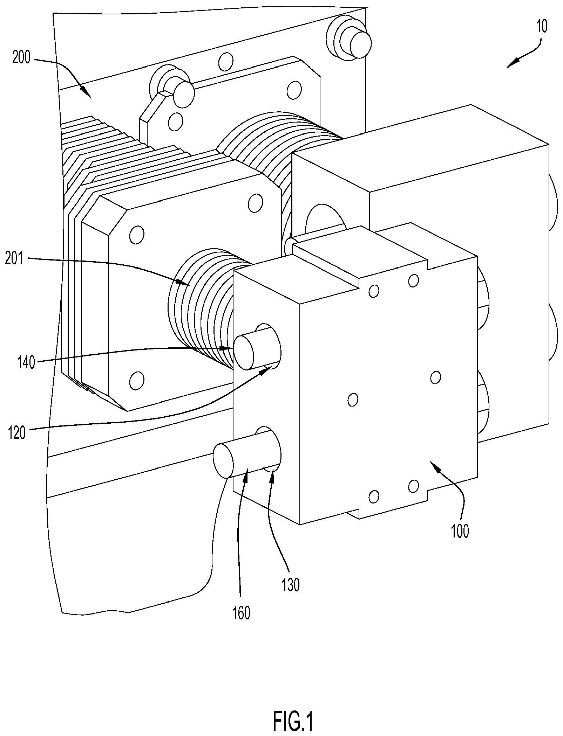

Now referring to FIG. 1 for a description of an example compressor 10 including an example embodiment of the rotary valves presented herein. The compressor 10 includes a block 200 with cylinders 201 extending therefrom. Two cylinders 201 are shown in the portion of the compressor 10 illustrated in FIG. 1; however, in other embodiments the compressor block 200 may include any number of cylinders 201 and each cylinder 201 may be capped by a cylinder head 100 that includes the rotary valves presented herein. The various cylinders 201 may be capped by cylinder heads 100 configured for different specific needs, such as a low-pressure head, a medium-pressure head, and a high-pressure head (for example as used in a multi-stage compressor). For simplicity's sake, a single cylinder 201 and cylinder head 100 are described herein.

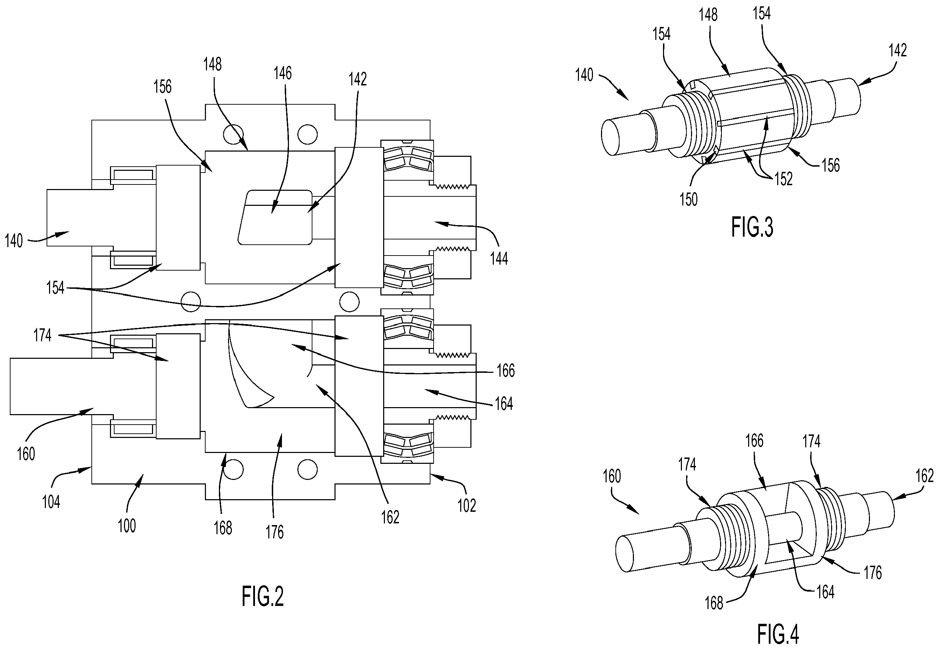

Still referring to FIG. 1, but now with reference to FIGs. 2-4 as well, in the depicted embodiment, the cylinder head 100 includes two rotary valves, a first valve 140 and a second valve 160, each of which is configured in accordance with example embodiments of the present invention. In the depicted embodiment, the first rotary valve 140 is a high-pressure rotary valve (e.g., a rotary valve configured for handling high-pressure gas) and the second rotary valve 160 is a low-pressure rotary valve (e.g., a rotary valve configured for handling low-pressure gas); however, in other embodiments, each of valve 140 and valve 160 may be configured for gas of any pressure. Despite being configured for different pressure gas, valve 140 and valve 160 have substantially similar dimensions and features, but include radial outlets (e.g., ports) of different sizes so that each valve can better accommodate gas pressures for which it is intended, as is described in further detail below. For example, generally, rotary valves 140 and 160 are each tubular members that include a section (e.g., a central section) with a port configured to rotate into alignment with a gas port included in the cylinder head 100 (e.g., an intake or exhaust port included in the head 100). The central section is also bounded by low-friction face seals (e.g., the central section is between two or more face seals) that allow the valve to rotate within a bore included in a head 100.

More specifically, in the embodiment depicted in Figs. 2-4, valve 140 includes a central section 156 that is disposed between two face seals 154 while valve 160 includes a central section 176 that is disposed between two face seals 174. Face seals 154 and face seals 174 each encircle or surround a substantially circular outer surface of their respective valve (e.g., face seals 154 encircle outer surface 148 and face seals 174 encircle outer surface 168). Additionally, face seals 154 and face seals 174 are each configured to engage a bore included in cylinder head 100 to allow rotary valve 140 and rotary valve 160 to rotate therein. Specifically, face seals 154 engage bore 120 while face seals 174 engage bore 130.

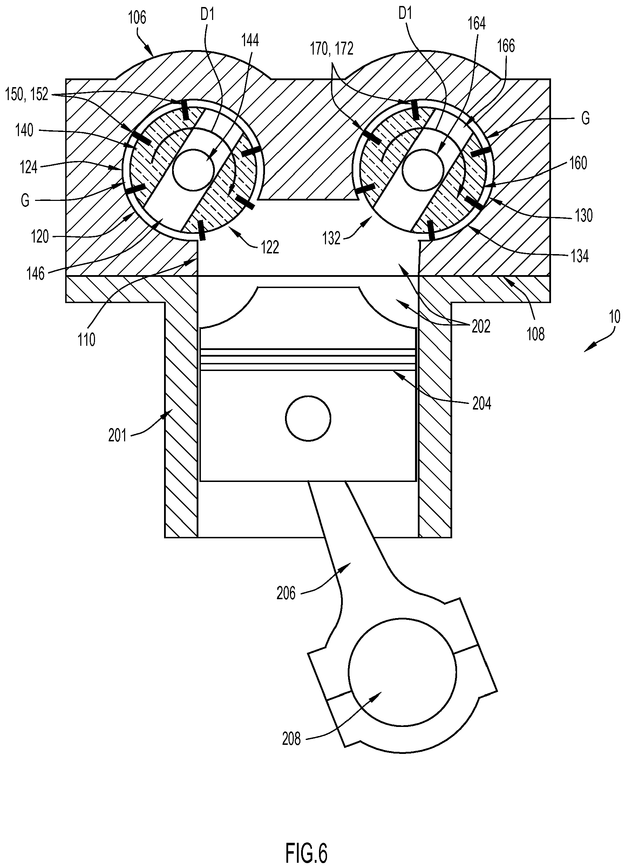

As is described in further detail below in connection with FIG 6, the engagement between face seal 154 and bore 120 slightly separates the central section 156 of valve 140 from bore 120 while the engagement between face seal 174 and bore 130 slightly separates the central section 176 of valve 160 from bore 130. Thus, face seals 154 and face seals 174 allow central sections 156 and 176 to rotate within the bores 120 and 130, respectively. Moreover, the engagement between face seals 154 and 174 and their respective bore is a low friction engagement and, thus, allows the central section (which includes a gas port) to rotate into and out of fluid communication with intake and exhaust ports included in cylinder head 100, even when the compression chamber included in the head is pressurized at high pressures typically associated with operations of high-performance compressors (such as approximately 6000psi). In order to provide this low friction engagement, face seals 154 and 174 are preferably silicon carbide seals. However, in other embodiments, the face seals may be composed of graphite variants or any other material that has a low coefficient of friction, can withstand high pressure (and the generated heat build-up against the seal), and/or has good wear properties (for example, silicon carbide wears well against silicon carbide and, thus, silicon carbide face seals are preferred for silicon carbide bores/heads). Although not illustrated, cylinder head 100 could include internal coolant and lubricant passageways. The coolant flowing through the cylinder head 100 may be used to remove the heat generated within the cylinder head 100. Additionally, lubricant passageways within the cylinder head 100 would serve to lubricate moving components. For instance, the face seals 154 and 174, which may be formed from a silicon carbide material, may generate significant heat when rotating within the journaled portions of the bores 120 and 130. Lubricating the rotating faces of the face seals 154 and 174 may not only help to cool the interface surfaces, but may serve to lower the frictional forces upon rotation of the face seals 154 and 174.

Although not labeled in the figures, during manufacture of the rotary valves 140, 160, the face seals 154 and 174 may be inserted axially onto either end of the valve. The face seals 154 and 174 may be coupled to the rotary valves 140, 160 via the use of a fastening device such as a dowel pin and/or a snap ring. Thus, the face seals 154 and 174 rotate in unison with the rotary valves 140, 160. Additionally, the journaled portions of the bores 120 and 130 of the cylinder head 100 which abut the face seals 154 and 174 may include their own silicon carbide faces which are coupled to the journaled portions of the bores 120 and 130 via the use of a fastening device such as a dowel pin. These silicon carbide faces on the journaled portions of the bores 120 and 130 remain stationary with respect to the rotary valves while the face seals 154 and 174 of the rotary valves 140, 160 rotate within the journaled portions of the bores 120 and 130.

Still referring to FIGs. 2-4, valve 140 also includes a gas port 142 and valve 160 also includes a gas port 162. Each gas port 142 and 162 is configured to allow gas to pass through its valve. More specifically, gas port 142 includes a central channel 144 and a radial port 146 while gas port 162 includes a central channel 164 and a radial port 166. The central channels 144, 164 extend longitudinally through at least a portion of their respective rotary valve 140, 160, such as from their respective central section 156, 176 to a first end or second end of the rotary valve and allow gas to be fed into the valve (and the cylinder head 100) from an external source or expelled from the valve (and the cylinder head 100) to an external destination. The radial ports 146, 166 extend from their respective central channel 144, 164. Consequently, in at least some embodiments, radial ports 146 and 166 may be substantially perpendicular to their respective central channel 144, 164. Regardless, radial ports 146 and 166 may be selectively aligned (via a variable valve timing devices) with gas ports included on the cylinder head 100 to enable gas to be exchanged between the valves 140, 160 and a compression chamber included in cylinder 201 within the block 200, as is described in further detail below. Put generally, gas port 142 allows gas to be exchanged between an end of rotary valve 140 (via channel 144) and the outer surface 148 of the central section 156 of valve 140 while gas port 162 allow gas to be exchanged between an end of rotary valve 160 (via channel 164) and the outer surface 168 of the central section 176 of valve 160.

One notable difference between valves 140 and 160 is the size of the radial outlets included therein. In the embodiment depicted in FIGs. 2-4, low pressure valve 160 includes a radial port 166 that spans an arc of approximately 165 degrees while high pressure valve 140 includes a radial port 146 (which is obscured in the view shown in FIG. 3 and oriented into the page or z-axis in FIG. 2) that spans an arc of approximately 70 degrees. The radial port 166 included in valve 160 is substantially larger than the radial port 146 included in valve 140 because valve 160 is a low-pressure valve and valve 140 is a high-pressure valve. However, in other embodiments, the radial outlet of each valve may span an arc of any size. Alternatively, the radial outlets may each be through holes that span two arcs of any desirable size on opposite sides of the valve, as is shown in the embodiment depicted in FIG. 6. However, since the size and design of gas ports 142 and 162 may vary in different embodiments, it is to be understood that any description of the valves included in FIGs. 2-4 may also apply to the valves included in FIGs. 6, 7A-D, and 8A-D, and vice versa. Accordingly, these embodiments are labeled with the same reference numerals.

Now referring to FIGs. 3 and 4, but with reference to FIG. 6 as well, the central section 156 of valve 140 also includes vane seals 152 and the central section 176 of valve 160 also includes vane seals 172. Vane seals 152 and vane seals 172 extend longitudinally along central section 156 and central section 176, respectively, and are also spaced there around. In the depicted embodiment, vane seals 152 each float radially within (e.g., are movably coupled to) slots 150 included in the outer surface 148 of the central section 156 of valve 140. Similarly, vane seals 172 each float radially within (e.g., are movably coupled to) slots 170 included in the outer surface 168 of the central section 176 of valve 160. Consequently, each of vane seals 152 and each of vane seals 172 can move radially (e.g., perpendicular to a longitudinal axis of the valves), away from the outer surface of a central section of a valve.

More specifically, during rotation of a valve, centripetal forces created by the rotation of a valve may urge vane seals 152, 172 outwardly in their slots 150, 170, towards a bore housing the valve. As is shown best in FIG. 6, these centripetal forces may urge the vane seals outwardly into contact with a bore, closing a gap "G" between each rotary valve and its respective bore. Additionally or alternatively, preload springs (or some other biasing member) may be installed between the bottom of the vane seals 152, 172 and the bottom of the slots 150, 170 and may be configured to actuate during rotation of the valve to ensure that the vane seals 152, 172 extend outwardly during rotation of the valve. Either way, the vane seals 152, 172 prevent air from escaping around the valves during rotation of the valves and/or during opening or closing events. In order to ensure that valve 140 and valve 160 can still rotate while the vane seals are extended, the vane seals are preferably formed from graphite or other low friction materials.

In different embodiments, the central section 156, 176 of a valve may include any number of vane seals; however, in the particular embodiment shown in FIG. 6, valve 140 includes six vane seals 152 spaced around the outer surface 148 of the central section 156 and valve 160 includes six vane seals 172 spaced around the outer surface 168 of the central section 176. In some embodiments, the number of vane seals may be determined by balancing the friction created by the vane seals against the seal provided by the vane seals.

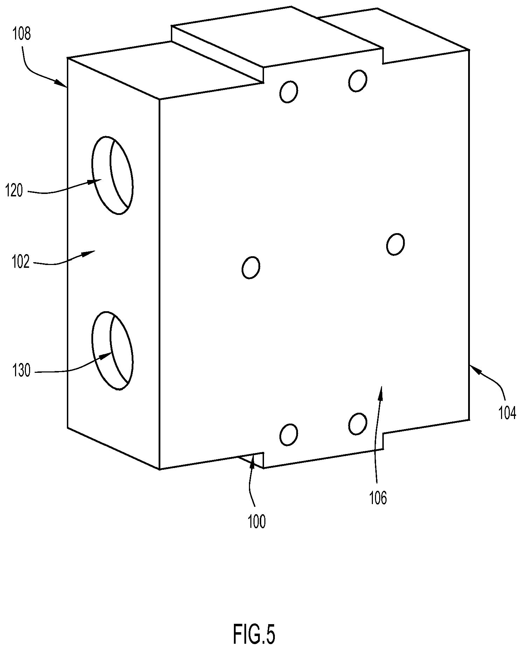

Now referring to FIGs. 5 and 6, but with continued reference to FIGs. 1 and 2, the cylinder head 100 is substantially cuboidal and includes a top surface 106 and a bottom surface 108, as well as a first side 102 and second side 104. The cylinder head 100 also includes two bores, bore 120 and bore 130, which are configured to receive the rotary valves presented herein. In the depicted embodiment, bore 120 and bore 130 each extend through the cylinder head 100 (e.g., from the first side 102 through to the second side 104) between and/or parallel to the top surface 106 and a bottom surface 108. Put another way, bore 120 and bore 130 extend longitudinally through the cylinder head 100. In other embodiments, bores 120 and 130 may extend through any portion of the cylinder head 100 and have any diameter (including a constant or varied diameter), provided bore 120 and bore 130 can each rotatably receive a rotary valve as presented herein.

As is shown best in FIG. 6, bore 120 and bore 130 each include one or more gas ports that provide access to a cavity 110 formed in the bottom surface 108 of the cylinder head 100. More specifically, bore 120 includes one or more gas ports 122 and bore 130 includes one or more gas ports 132. In the depicted embodiment, the one or more gas ports 122 and 132 each comprise a constant opening between the first end 102 and the second end 104 of the cylinder head 100, but in other embodiments, the gaps ports may include multiple, smaller openings staggered longitudinally between the first end 102 and the second end 104 of the cylinder head 100. Regardless, when the cylinder head 100 is coupled to cylinder 201, the cavity 110 and the cylinder 201 define a compression chamber 202 (or an expansion chamber in the motoring mode of operation) and gas ports 122 and 132 allow rotary valves mounted within bore 120 and bore 130 (e.g., rotary valve 140 and rotary valve 160) to communicate with the compression/expansion chamber 202, respectively.

Still referring to FIG. 6, but now with reference to FIG. 2 as well, in the depicted embodiment, bores 120 and 130 have a varying or stepped diameter to substantially match or mate with the diameter of the rotary valve disposed therein (see, e.g., FIG. 2). More specifically, bore 120 includes a substantially circular wall 124 configured to rotatably receive the central section 156 of rotary valve 140 while bore 130 includes a substantially circular wall 134 configured to rotatably receive the central section 176 of rotary valve 160. Notably, bore 120 and bore 130 rotatably receive central section 156 and central section 176 by having a bore diameter that is slightly larger than the diameter of the central section of the valve and only configured to mate with the face seals included on a valve. Consequently, a gap "G" is provided between bore 120 and the portion of the central section 156 of valve 140 disposed between face seals 154, as well as between bore 130 and the portion of the central section 176 of valve 160 disposed between face seals 174. In other words, the face seals included on a valve rotatably engage a bore and allow the central section (which includes the fluid port) to rotate therein.

Regardless of the size and function of the valves (e.g., configured for a high-pressure head, low-pressure head, or medium pressure head), the valves may be disposed within bore 120 or bore 130 in the manner discussed above (e.g., with a gap "G" around the central section and face seals engaging the bore diameter). However, the size of the valve may be determined based on a ratio to displacement of the compressor/motor. For some examples, if a piston 204 in communication with the cylinder 201 and chamber 202 covers a swept volume of 3.42 in.³, the valve may have a central section with a diameter of 1.875 inches. Meanwhile, if the piston 204 covers a swept volume of 17.59 in.³, the valve may have a central section with a diameter of 2.25 inches, and if the piston 204 covers a swept volume of 45.25 in.³, the valve may have a central section with a diameter of 3.12inches.

Still referring to FIG. 6, generally the compressor 10 is configured to either supply rotary power to a compression operation or be driven in a reversal of the compression operation. Either way, piston 204 is a reciprocating piston configured to periodically alter a volume of the compression chamber 202. When the compressor is supplying rotary power to a compression operation, the piston 204 is primarily driven by a connecting rod 206 that is pivotally mounted to the piston 204 and a crankshaft (illustrated at 208). However, if the operations of the compressor 10 are reversed, the rotary valves may provide an intake of high pressure air that primarily drives the piston 204 to drive the crankshaft 208 via the connecting rod 206.

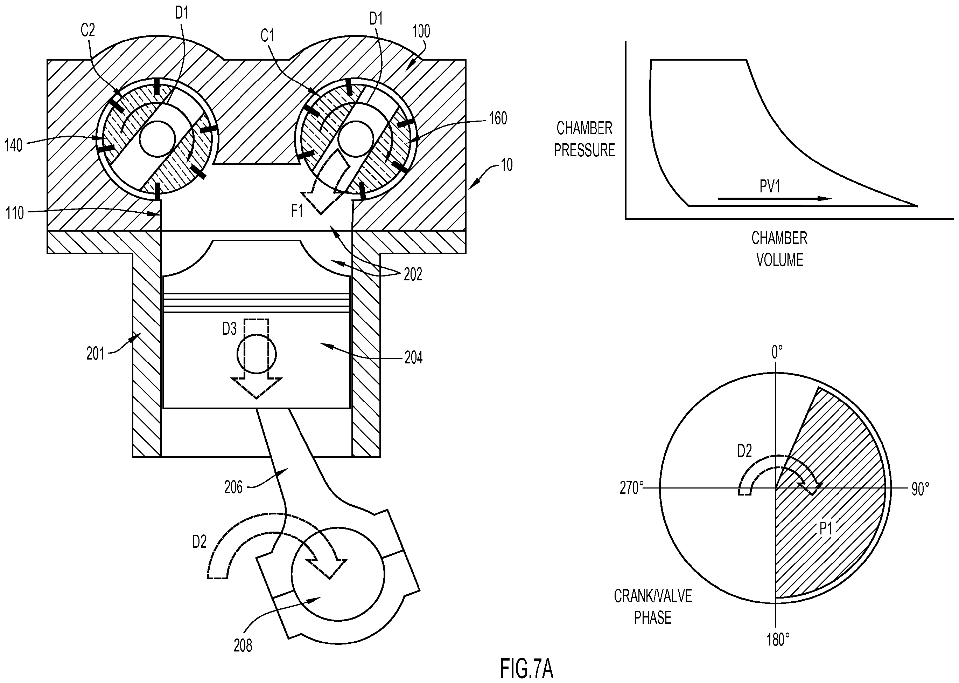

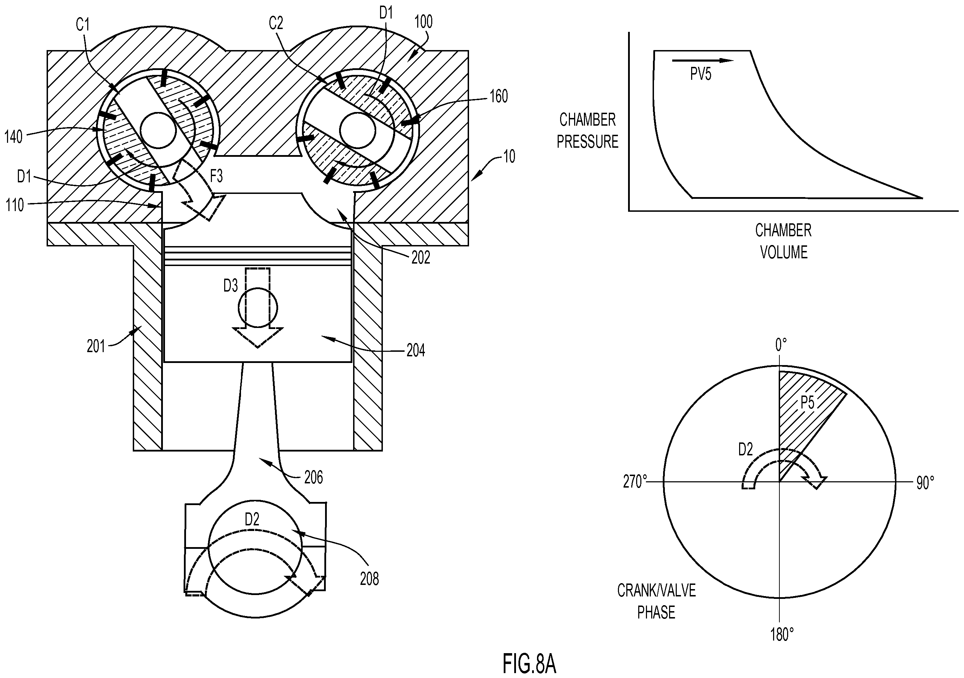

FIGs. 7A-D and 8A-D illustrate two exemplary cycles facilitated by the rotary valves presented herein are illustrated. FIGs. 7A-D illustrate a compression cycle while FIGs. 8A-8D illustrate a full reversal of the compression cycle (a motoring cycle). Notably, in both cycles rotary valve 140 and rotary valve 160 rotate in the same direction (D1), but the timing of the opening and closing events is altered allowing the system to be reversed. Although not shown, in at least some embodiments, the compressor includes a phasing device (or variable valve timing device) located between the crankshaft 208 and the valves 140, 160 that is configured to permit variations in valve opening and closing events. This allows for full system reversal and also allows for system optimization (e.g., by compensating for volumetric losses or timing variation during operation of the compressor).

As is explained in further detail below, altering the phase of the valves 140, 160 from the reference of the crankshaft 208 to allow for a full system reversal causes the system to intake high-pressure air and expel low-pressure air. By comparison, when the system is run with normal or standard phases, the system is configured to compress low-pressure gas to create and expel high-pressure gas. Example embodiments of each of these cycles are explained in further detail below with illustrations of four phases of each cycle. Each phase is illustrated with a cross-sectional view of the system during that phase, a radial illustration of crank and valve positions during the phase, and a pressure-volume diagram (PV-diagram) of the compression chamber 202 during the phase. In the radial illustration of the crank-valve phase, 0° corresponds to top dead center and 180° corresponds to bottom dead center.

Before turning to the specific phase descriptions, a few disclaimers must be delineated. Initially, although the PV-diagrams included in FIGs. 7A-D and 8A-D include relatively straight and/or smooth segments, these segments need not actually be smooth and are only provided as examples. Similarly, although FIGs. 7A-D and 8A-D illustrate specific angular positions for each of the phases, these positions are merely examples, and may differ in different embodiments. Moreover, although the radial illustrations are labeled as crank-valve phase, in some embodiments, these illustrations may only be representative of the crank phase. For example, in some embodiments the valves may only rotate between phases. That being said, in other embodiments, the valves may continually rotate during a compression or reversal cycle; however, the valves need not rotate at a constant rate. Additionally, regardless of the speed and timing of the valve rotation, the valves may be rotated, when desired, with any mechanism and/or device configured to provide rotation, provided the mechanism and/or device can at least rotate the valves into and through a pressurized compression chamber to move the valves between an open configuration and a closed configuration. Still further, when used herein, the phrase "open configuration means" that the port of the valve is in fluid communication with the compression chamber. By comparison, the port of a valve in a "closed configuration" is not in fluid communication with the compression chamber.

Now turning to FIGs. 7A-D, these figures collectively illustrate a compression cycle (e.g., standard operation of a compressor) utilizing rotary valves in accordance with the present invention. As shown in FIG. 7A, initially, the low-pressure rotary valve 160 is rotated into an open configuration C1 for a portion of a downward stroke of the reciprocating piston 204 (e.g., as the piston moves downward in direction D3). More specifically, rotary valve 160 is open while the connecting rod 206 (and, thus, the crankshaft 208) is in a first phase P1 ("intake"), which may span from a crankshaft position of approximately 15° to approximately 180°. The volume expansion provided by the piston 204 may draw in low pressure air via rotary valve 160 (via channel 164 and through port 166), as shown by flow F1 (e.g., the valve 160 provides an intake port). In at least some embodiments, the gas port 162/166 may be configured (e.g., sized) to remain aligned with the port 132 (see FIG. 6) in the cylinder head 100 during phase P1 to ensure that rotary valve 160 provides an intake valve during phase P1 despite continued rotation (in direction D1) of the rotary valve 160. For example, the low-pressure valve may include a radial opening that spans an arc of approximately 165 degrees (or more) to ensure it remains aligned with the intake port 132 in the cylinder head 100 through 165 degrees of rotation. As shown in the PV-diagram (by arrow PV1), keeping valve 160 in the open configuration C1 during phase P1 increases the volume of gas in the chamber without increasing the pressure (since the chamber is expanding). During phase P1, the high-pressure valve 140 remains in a closed configuration C2.

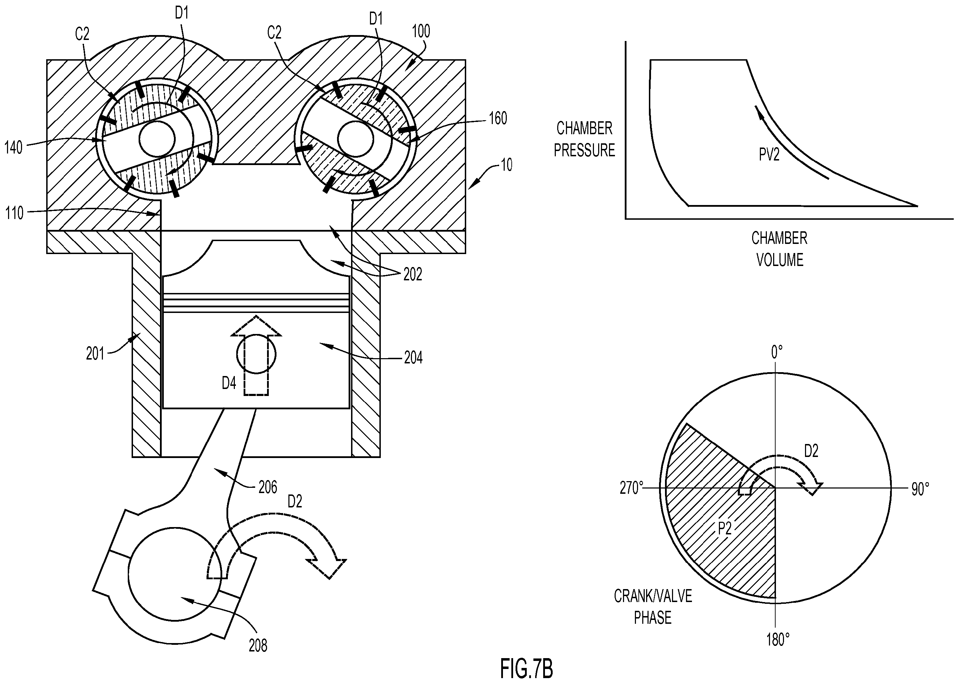

Once the connecting rod 206 reaches bottom dead center (e.g., at 180°), rotary valve 160 rotates into a closed configuration C2, as shown in FIG. 7B. Valve 160 and valve 140 remain closed (e.g., remain disposed in a closed configuration C2) during a second phase P2 ("compression") of the rotary cycle that comprises a majority of the upward stroke of the piston 204 (e.g., as the piston moves in direction D4). More specifically, in the depicted embodiment, valves 160 and valve 140 remain closed as the connecting rod 206 rotates (in direction D2) approximately 110 degrees past bottom dead center (to approximately 290 degrees on the radial illustration). However, the valves 140, 160 may continue to rotate (while remaining in the closed configuration C2) during this phase. Regardless, during the second phase P2, the piston 204 decreases the volume of the chamber 202 while increasing the pressure of the gas in the chamber 202, as shown by arrow PV2 included in the PV-diagram of FIG. 7B.

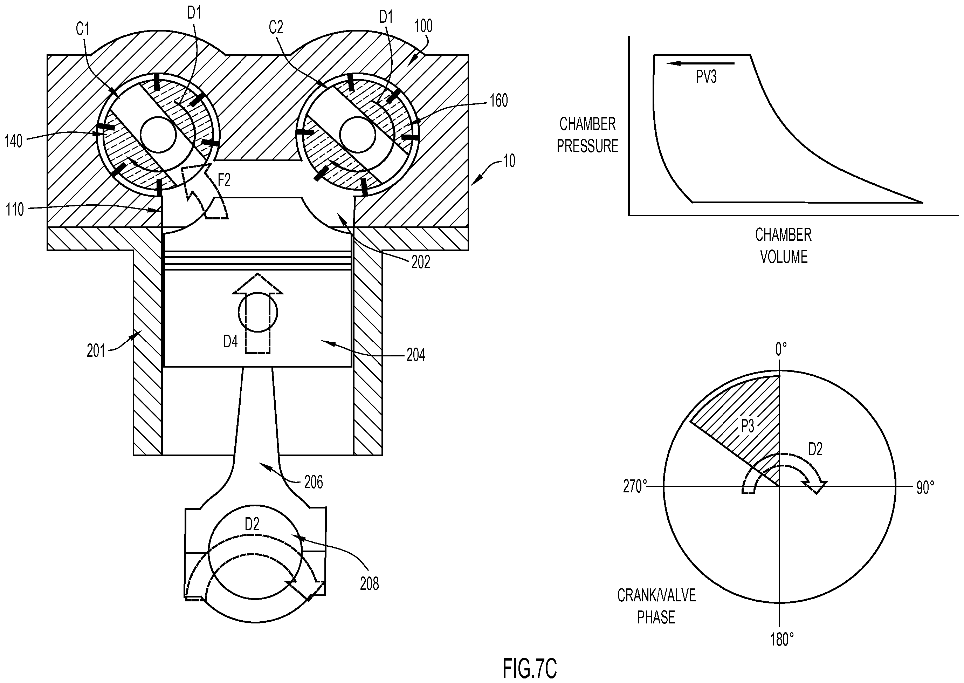

As the connecting rod 206 (and crankshaft 208) approach top dead center, the first rotary valve 140 (e.g., the high-pressure valve) rotates open (e.g., into an open configuration C1), as shown in FIG. 7C while the second rotary valve 160 remains disposed in a closed configuration C2. Valves 140 and 160 remain in these configurations during a third phase P3 ("exhaust") of the rotary cycle, which spans from approximately 290 degrees to approximately 0° on the radial illustration (e.g., top dead center). For example, in at least some embodiments, the radial opening of the high pressure port 146 spans an arc of approximately 70 degrees to ensure it remains aligned with port 122 through the entire rotation provided in phase P3. Thus, as the piston 204 moves upwards in direction D4 during its upward stroke, high-pressure air may be expelled from chamber 202 via valve 140 (through port 146 and out of channel 144), as shown by flow F2. As shown by arrow PV3 in the PV-diagram of FIG. 7C, this action decreases the volume of high-pressure gas in chamber 202.

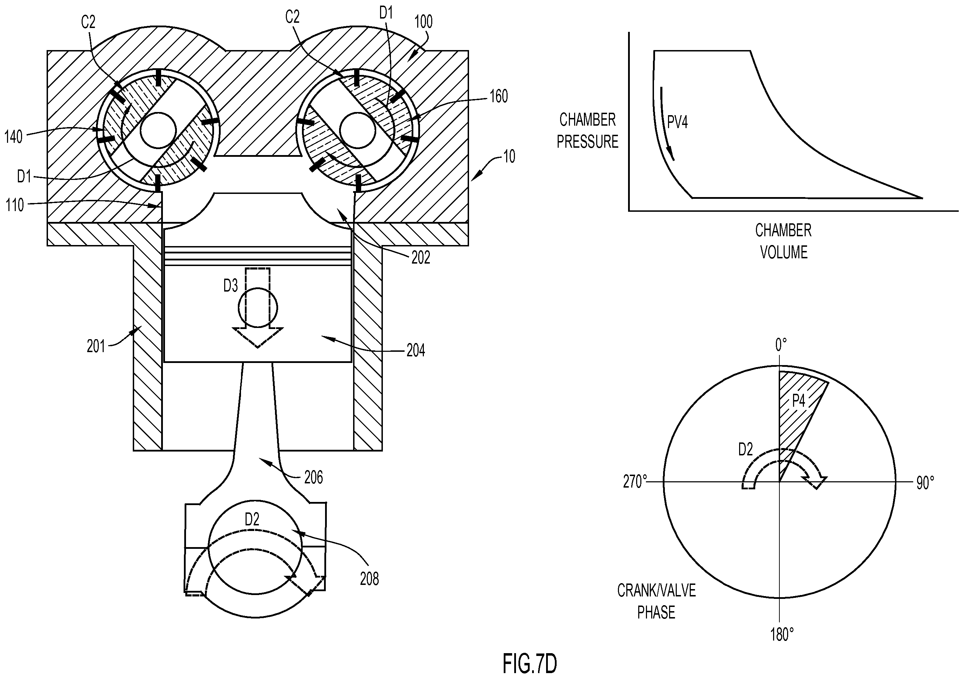

Valve 140 is rotated into a closed configuration C2 when the connecting rod 206 reaches top dead center (0° on the radial illustration), as shown in FIG. 7D. Then, both valve 140 and valve 160 are retained in a closed configuration C2 until the connecting rod 206 rotates approximately 15 degrees past top dead center. In other words, valves 140 and 160 are retained in a closed configuration C2 for a fourth phase P4 ("clearance volume expansion") of the rotary cycle. During the fourth phase P4, the piston 204 is again in its downward stroke (e.g., moving in direction D3) and, thus, expanding the volume of chamber 202. Since both valve 140 and 160 are closed during this expansion, the chamber pressure decreases during the fourth phase P4, as shown by an arrow PV4 included in the PV-diagram of FIG. 7D, bringing the system back to the position, pressure, and volume that were present prior to phase P1. At this point, momentum from the connecting rod 206 and/or crankshaft 208 may cause the system 10 to move into another compression cycle.

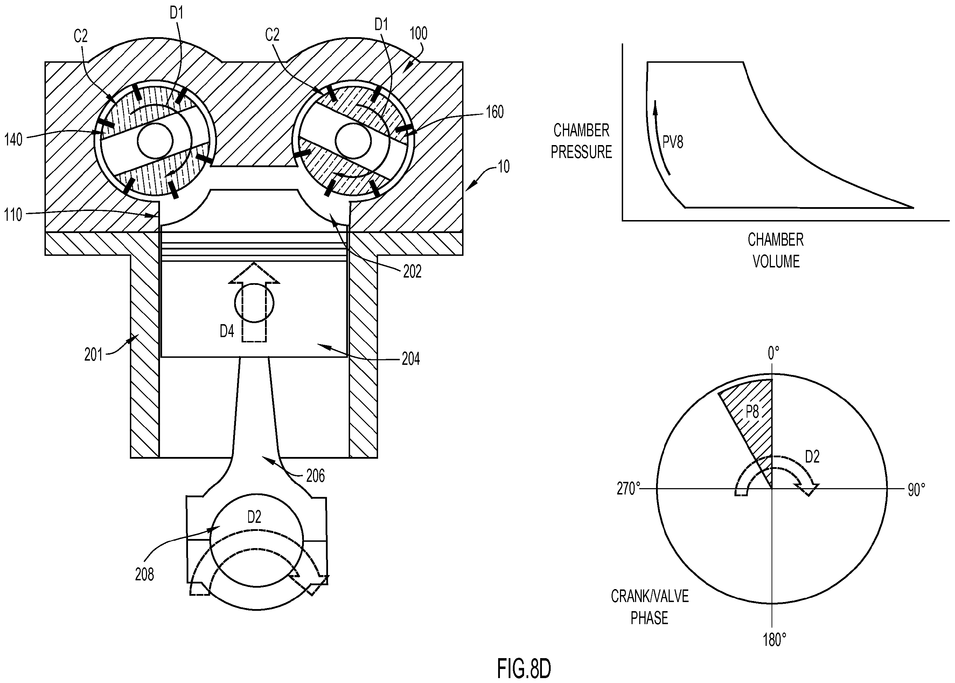

Now turning to FIGs. 8-D, a reversal of the compression cycle from FIGS. 7A-D is illustrated in four phases. In this "reversed" cycle, the compressor functions as an air motor. As shown in FIG. 8A, initially, the high-pressure rotary valve 140 is rotated into an open configuration C1 when the connecting rod 206 is at top dead center. Rotary valve 140 remains in an open configuration C1 during a first phase P5 ("intake of exhaust") of the rotation cycle of the connecting rod 206 (and, thus, the crankshaft 208), which may span from approximately 0° to approximately 70 degrees. Consequently, rotary valve 140 allows high-pressure gas to be exhausted into the compression chamber 220 (via channel 144 and port 146) in the first phase P5, as shown by flow F3. As mentioned, in at least some embodiments, the radial opening of the high pressure port 146 spans an arc of approximately 70 degrees to ensure it remains aligned with cylinder head port 122 through the entire rotation provided in phase P5. The high-pressure gas entering the chamber and/or the momentum of the connecting rod 206/crankshaft 208 (if any) may drive the piston 204 into its downward stroke (e.g., in direction D3), expanding the chamber 202. As shown by arrow PV5, this may increase the volume of gas in the chamber 202 without decreasing the pressure of the gas (e.g., due to constant introduction of high-pressure gas into the chamber 202). During phase P5, the low-pressure valve 160 remains in a closed configuration C2.

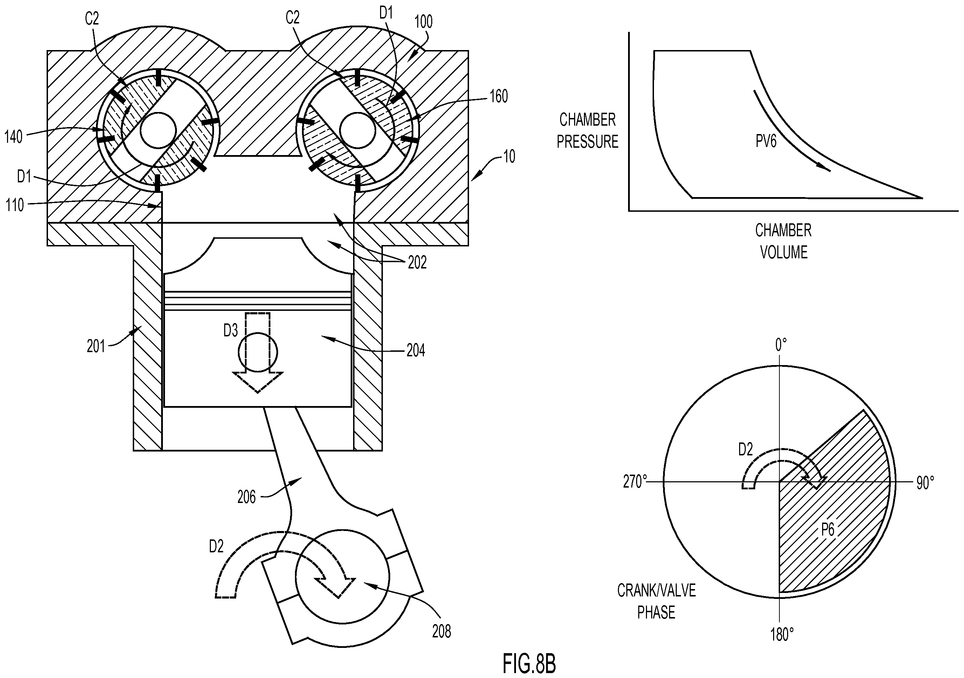

Once the crankshaft 208 rotates approximately 70 degrees past top dead center (e.g., 70 degrees), rotary valve 140 rotates closed, as shown in FIG. 8B. Valve 140 and valve 160 remain closed (e.g., remain disposed in a closed configuration C2) during a second phase P6 ("expansion") of the rotary cycle that comprises a majority of the downward stroke of the piston 204 (e.g., as the piston moves in direction D3). More specifically, in the depicted embodiment, valves 160 and valve 140 remain closed as the crankshaft 208 rotates (in direction D2) to approximately bottom dead center. Regardless, during the second phase P6, the piston 204 increases the volume of the chamber 202 while the chamber 202 is closed and, thus, the pressure of the gas in the chamber 202 decreases, as shown by arrow PV6 included in the PV-diagram of FIG. 8B.

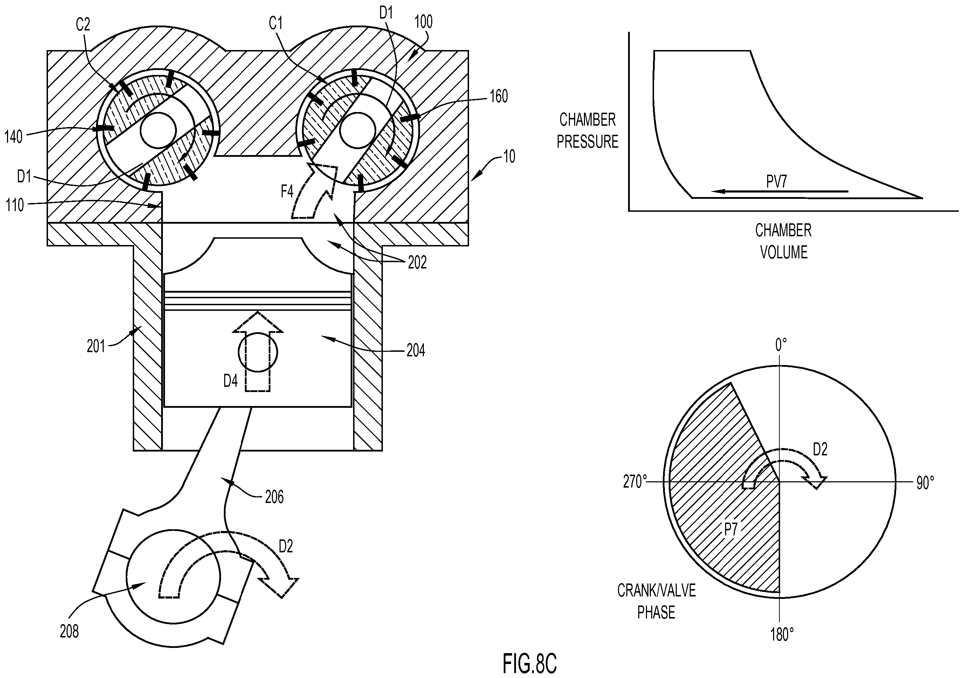

Once the connecting rod 206 (and crankshaft 208) reaches bottom dead center, the low-pressure rotary valve 160 rotates open (e.g., into an open configuration C1) while the high-pressure rotary valve 140 remains disposed in a closed configuration C2, as shown in FIG. 8C. Valves 140 and 160 remain in these configurations during a third phase P7 of the rotary cycle ("exhaust"), which spans from approximately 180° (bottom dead center) to approximately 345 degrees (e.g., approximately 15 degrees before top dead center). Thus, as the piston 204 moves upwards in direction D4 during its upward stroke, low-pressure air may be expelled from chamber 202 via valve 160 (via port 166 and channel 164), as shown by flow F4. As mentioned, in at least some embodiments, the low-pressure valve 160 may include a radial opening 166 that spans an arc of approximately 165 degrees (or more) to ensure it remains aligned with the intake port 132 of cylinder had 100 through substantially all 165 degrees of rotation. As shown by arrow PV7 in the PV-diagram of FIG. 8C, this action may decrease the volume of low-pressure gas in chamber 202.

Valve 140 is rotated into a closed configuration C2 when the crankshaft 208 reaches approximately 345 degrees (e.g., about 15 degrees before top dead center), as shown in FIG. 8D. Then, both valve 140 and valve 160 are retained in a closed configuration C2 until the crankshaft 208 rotates to top dead center. In other words, valves 140 and 160 are retained in a closed configuration for a fourth phase P8 of the rotary cycle ("valve overlap/clearance compression"). During the fourth phase P8, the piston 204 is still in its upward stroke (e.g., moving in direction D4) and, thus, contracting the volume of chamber 202. Since both valve 140 and 160 are closed during this expansion, the chamber pressure increases during the fourth phase P8, as shown by an arrow PV8 included in the PV-diagram of FIG. 8D, to prepare for incoming high-pressure gas during the next rotary cycle (e.g., rotation). Rotary power is produced at the crankshaft during the motor cycle illustrated in FIGs. 8.

Notably, in the four phases illustrated in FIGs. 7A-D (e.g., phases P1-P4 - compressor mode) and the four phases illustrated in FIGs. 8A-D (e.g., phases P5-P8 - motor mode), the crankshaft 208 rotates approximately 360°, moving the piston 204 through its stroke. Thus, the system is able to either generate high-pressure gas (from low-pressure gas) or generate energy (from high-pressure gas) with a single rotation of the crankshaft. As mentioned above, in the two different cycles (e.g., FIGs. 7A-D and FIGs. 8A-D), rotary valves 140 and 160 rotate in the same direction (direction D1) and the connecting rod 206 and crankshaft 208 rotate in the same direction (direction D2). The two different cycles may be achieved by adjusting the timing of the rotation of valves 140 and 160 with respect to rotation of the connecting rod 206 and crankshaft 208 (and, thus, the position of the piston 204). In order to operate the system as a compressor, the low-pressure rotary valve is opened during a portion of the down stroke of the piston to provide a low-pressure intake. Then, the high-pressure valve is opened during a latter portion (e.g., close to the end) of the upward stroke of the piston. By comparison, to operate the system as an energy recovery system or air motoring device, the high-pressure valve is opened during a portion of the down stroke of the piston to provide the intake of the high-pressure gas. Then, the low-pressure valve is opened for a substantial portion of the upwards stroke of the piston to exhaust the expanded, now low pressure, gas.

The features of the rotary valves presented herein provide a number of advantages. Most notably, the low-friction face seals and the manner in which the rotary valves are mounted within a head allow the rotary valves presented herein to be implemented in compressors, including high-performance compressors. The rotary valves will continue to rotate in and through high pressure compression chambers, even at high pressures, such as 6000psi. Implementing such rotary valves in compressors allows light-weight, high-performance compression systems to be created and provides these systems with enhanced accuracy. Moreover, since the rotational timing of the rotary valves can be easily optimized, adjusted, compression systems with rotary valves can be easily adjusted, or even reversed. The two-way flow nature of the rotary valves of the present invention allow the compressor to be reversed and used as an air motor. Still further, the external vane seals included on the rotary valves prevents inter-valve leakage (e.g., prevent air in the closed valve body from flowing to or from the compression chamber).

The rotary valves presented herein lends itself to the compression (and later motoring use) of large quantities of gas which is relevant for energy storage applications including, but not limited to pneumatic hybrid vehicle regenerative braking systems, pneumatic electrical utility peak demand energy storage systems, and aerospace pneumatic suspension and release power source.

Having described example embodiments of rotary valves for use in a compressor/air motor, it is believed that other modifications, variations and changes will be suggested to those skilled in the art in view of the teachings set forth herein. It is therefore to be understood that all such variations, modifications and changes are believed to fall within the scope of the present invention as defined by the appended claims. Although specific terms are employed herein, they are used in a generic and descriptive sense only and not for purposes of limitation.

## Claims

1. A two-way flow rotary valve for a reversible compressor comprising:
a tubular member with a first end and a second end;
two or more low friction face seals disposed around the tubular member between the first end and the second end;
a central section disposed between the two or more low friction face seals, wherein the two or more low friction face seals allow the central section to rotate within a substantially cylindrical receiver of a cylinder head; and
a gas port extending radially through the tubular member that is configured to allow the rotary valve to selectively exchange gas with a compression chamber.

2. The two-way flow rotary valve of claim 1, wherein the face seals are composed of silicon carbide.

3. The two-way flow rotary valve of claim 2, wherein the silicon carbide face seals allow the rotary valve to rotate into fluid communication with the compression chamber when the pressure of the compression chamber is up to approximately 6000psi.

4. The two-way flow rotary valve of claim 1, wherein the central section further comprises:
an outer surface, and the rotary valve is mounted within the substantially cylindrical receiver of the cylinder head so that a gap is provided between the outer surface and the substantially cylindrical receiver.

5. The two-way flow rotary valve of claim 4, further comprising:
a plurality of vane seals configured to selectively extend between the outer surface and the substantially cylindrical receiver to seal the gap and prevent inter-valve leakage.

6. The two-way flow rotary valve of claim 5, wherein the tubular member includes a longitudinal axis and the plurality of vane seals are mounted in a direction that is parallel to the longitudinal axis.

7. The two-way flow rotary valve of claim 5, wherein the central section includes a plurality of slots and the plurality of vane seals are secured within the slots.

8. The two-way flow rotary valve of claim 5, wherein the plurality of vane seals are graphite vane seals that allow the rotary valve to rotate within the substantially cylindrical receiver of the cylinder head when the vane seals are extended.

9. The two-way flow rotary valve of claim 1, wherein the reversible compressor comprises:
a cylinder defining the compression chamber; and
a compressor block with a reciprocating piston configured to periodically alter a volume of the compression chamber,
wherein the rotary valve is positioned in the cylinder head so that the selective exchange of gas with the compression chamber enables the compressor to selectively cycle through compression phases and motoring phases.

10. The two-way flow rotary valve of claim 9, wherein the rotary valve is configured to enable the compressor to cycle through the compression phases to generate high-pressure air or cycle through the motoring phases to generate energy during a single revolution of a crankshaft coupled to the reciprocating piston.
